# EUROPÄISCHE PATENTSCHRIFT

(11) **EP 3 507 475 B1**
(45) Veröffentlichungstag und Bekanntmachung des Hinweises auf die Patenterteilung: **08.03.2023**
(21) Anmeldenummer: 17748473.0
(22) Anmeldetag: 03.08.2017
(51) Int. Cl.: F02D 41/14, F02D 13/02, F02D 35/02, F02D 41/00, F01L 1/02

(54) **VERFAHREN, STEUERVORRICHTUNG UND SYSTEM ZUM ERKENNEN EINER ABWEICHUNG EINES TATSÄCHLICHEN BETÄTIGUNGSZEITPUNKTS EINES GASWECHSELVENTILS EINER VERBRENNUNGSKRAFTMASCHINE VON EINEM VORGEGEBENEN BETÄTIGUNGSZEITPUNKT**
METHOD, CONTROL DEVICE AND SYSTEM FOR DETECTING A DEVIATION OF AN ACTUAL ACTIVATION TIME OF A GAS EXCHANGE VALVE OF AN INTERNAL COMBUSTION ENGINE FROM A PREDEFINED ACTIVATION TIME
PROCÉDÉ, DISPOSITIF DE COMMANDE ET SYSTÈME PERMETTANT DE DÉTECTER UN ÉCART ENTRE UN INSTANT D'ACTIONNEMENT RÉEL D'UNE SOUPAPE D'ÉCHANGE DE GAZ D'UN MOTEUR À COMBUSTION INTERNE ET UN INSTANT D'ACTIONNEMENT PRÉDÉFINI

(30) Priorität: 02.09.2016 DE 102016216652
(43) Veröffentlichungstag der Anmeldung: 10.07.2019
(73) Patentinhaber: Volkswagen Aktiengesellschaft, 38440 Wolfsburg (DE)
(72) Erfinder: PETERSEN, Lars, 38536 Meinersen (DE); SHURKEWITSCH, Andre, 38547 Calberlah (DE); LANG, Leonhard, 38102 Braunschweig (DE); ARENZ, Christian, 38110 Braunschweig (DE); SCHWIEGER, Stephan, 29342 Wienhausen (DE); KAWELKE, Peter, Isenbüttel 38550 (DE); CAMPE, Mario, 38547 Calberlah (DE); HEINS, Sebastian, 38100 Braunschweig (DE); SCHELLER, Torsten, 38444 Wolfsburg (DE); MISIEK, Pierre, 31303 Burgdorf (DE); ZIMBALIST, Nikolaus, 31234 Edemissen (DE)
(86) Internationale Anmeldenummer: PCT/EP2017/069601
(87) Internationale Veröffentlichungsnummer: WO 2018/041510

(56) Entgegenhaltungen:
- DE-A1-102008 001 099
- DE-A1-102013 011 772
- DE-A1-102013 102 071
- DE-A1-102014 207 270
- DE-A1-102015 200 472
- DE-A1-102015 209 665

## Beschreibung

Die Erfindung betrifft ein Verfahren zum Erkennen einer Abweichung eines tatsächlichen Betätigungszeitpunkts eines Gaswechselventils einer Verbrennungskraftmaschine, beispielsweise einer Verbrennungskraftmaschine eines Kraftfahrzeugs, von einem vorgegebenen Betätigungszeitpunkt aufgrund einer Abweichung einer Ventiltriebkonfiguration des Gaswechselventils von einer Referenz-Ventiltriebkonfiguration eines Referenzgaswechselventils einer Referenzverbrennungskraftmaschine auf Grundlage eines gemessenen Druckverlaufs in der Verbrennungskraftmaschine und eines Referenzdruckverlauf in der Referenzverbrennungskraftmaschine. Die Erfindung betrifft weiterhin eine Steuervorrichtung zum Ausführen eines solchen Verfahrens.

Für einen effizienten Betrieb einer Verbrennungskraftmaschine ist eine möglichst genaue Kenntnis einer Zylinderfüllung der Verbrennungskraftmaschine, insbesondere einer Frischluftmasse in dem Zylinder, unerlässlich. Daher wird für Verbrennungskraftmaschinen einer Serie für vorgegebene Betriebspunkte der Verbrennungskraftmaschine jeweils eine Zylinderfüllung hinterlegt.

Allerdings unterliegt jede Verbrennungskraftmaschine einer Serie Toleranzen, beispielsweise Toleranzen in einem Ventiltrieb. Eine Folge dieser Toleranzen sind fehlerbehaftete Betätigungszeitpunkte von Gaswechselventilen und daraus resultierende Abweichungen einer tatsächlichen Zylinderfüllung von den jeweiligen hinterlegten Zylinderfüllungen, die sich merklich auf die Effizienz des Betriebs der Verbrennungskraftmaschine auswirken.

Folglich ist es von großer Bedeutung, die Toleranzen bei der Bestimmung der Zylinderfüllung zu berücksichtigen. Beispielsweise können Toleranzen in einer Phase zwischen einem Kurbelwellenwinkel und einem Nockenwellenwinkel auftreten. Die DE 103 07 307 A1 offenbart ein Verfahren zum Steuern einer Brennkraftmaschine, wobei die Phase zwischen einem Kurbelwellenwinkel und einem Nockenwellenwinkel bestimmt wird und bei Abweichungen von einer vorgegebenen Phase eine Anpassung durchgeführt wird.

Allerdings spielen auch weitere Toleranzen im Ventiltrieb eine bedeutende Rolle, beispielsweise Toleranzen zwischen dem Sensor für den Nockenwellenwinkel und dem Betätigungszeitpunkt eines Gaswechselventils. Diese können durch Bauteiltoleranzen oder Montagetoleranzen bedingt sein und können auch messtechnisch erfasst werden. Die Vermessung des Ventiltriebs für jede Verbrennungskraftmaschine stellt jedoch einen unverhältnismäßigen Aufwand dar.

Die WO 2014/026796 A1 beschreibt ein Verfahren zum Überwachen der plangemäßen Funktion von Gaswechselventilen einer Brennkraftmaschine. Dadurch kann eine Fehlfunktion der Gaswechselventile erkannt werden, nicht jedoch herstellungsbedingte Fehlertoleranzen einer Ventiltriebkonfiguration eines Serienfahrzeugs.

Die DE 10 2015 209 665 A1 beschreibt ein Verfahren zur Identifizierung von Ventilsteuerzeiten, wobei mit Hilfe Diskreter-Fourier-Transformation Phasenwinkel ausgesuchter Signalfrequenzen von gemessenen Druckschwingungen in einem Serien-Verbrennungsmotor ermittelt werden und die Ventilsteuerzeiten des Serien-Verbrennungsmotors anhand der ermittelten Phasenwinkel sowie anhand von Referenz-Phasenwinkeln und Referenz-Ventilsteuerzeiten ermittelt werden.

Die DE 10 2013 102 071 A1 beschreibt ein Verfahren zum Überprüfen einer Funktion eines Auslassventils, wobei ein Abgasdruck gemessen wird und mit einem Vergleichswert verglichen wird.

Aufgabe der vorliegenden Erfindung ist es, ein Verfahren, eine Steuervorrichtung und ein System zum Erkennen einer Abweichung eines tatsächlichen Betätigungszeitpunkts eines Gaswechselventils einer Verbrennungskraftmaschine von einem vorgegebenen Betätigungszeitpunkt aufgrund einer Abweichung einer Ventiltriebkonfiguration des Gaswechselventils von einer Referenz-Ventiltriebkonfiguration eines Referenzgaswechselventils einer Referenzverbrennungskraftmaschine bereitzustellen, die die oben genannten Nachteile wenigstens teilweise überwinden.

Diese Aufgabe wird durch das erfindungsgemäße Verfahren nach Anspruch 1 und die erfindungsgemäße Steuervorrichtung für eine Verbrennungskraftmaschine nach Anspruch 8 gelöst.

Gemäß einem ersten Ausführungsbeispiel betrifft die Erfindung ein Verfahren zum Erkennen einer Abweichung eines tatsächlichen Betätigungszeitpunkts eines Gaswechselventils einer Verbrennungskraftmaschine von einem vorgegebenen Betätigungszeitpunkt aufgrund einer Abweichung einer Ventiltriebkonfiguration des Gaswechselventils von einer Referenz-Ventiltriebkonfiguration eines Referenzgaswechselventils einer Referenzverbrennungskraftmaschine, umfassend die Schritte:
Auswerten eines gemessenen Druckverlaufs, der in einem gasführenden Bereich der Verbrennungskraftmaschine gemessen ist, im Vergleich zu einem Referenzdruckverlauf, der in einem gasführenden Referenzbereich der Referenzverbrennungskraftmaschine zu erwarten ist, wobei der gasführende Bereich der Verbrennungskraftmaschine dem gasführenden Referenzbereich der Referenzverbrennungskraftmaschine entspricht, wobei ein Stellorgan während der Messung des Druckverlaufs so eingestellt ist, dass sich ein Druck vor dem Stellorgan erhöht, wobei das Stellorgan ein Abgasturbolader oder eine Abgasklappe ist, und
Erkennen der Abweichung des tatsächlichen Betätigungszeitpunkts von dem vorgegebenen Betätigungszeitpunkt in Abhängigkeit eines Ergebnisses der Auswertung des gemessenen Druckverlaufs.

Gemäß einem zweiten Ausführungsbeispiel betrifft die Erfindung eine Steuervorrichtung für eine Verbrennungskraftmaschine, die zum Ausführen eines Verfahrens zum Erkennen einer Abweichung eines tatsächlichen Betätigungszeitpunkts eines Gaswechselventils einer Verbrennungskraftmaschine von einem vorgegebenen Betätigungszeitpunkt aufgrund einer Abweichung einer Ventiltriebkonfiguration des Gaswechselventils von einer Referenz-Ventiltriebkonfiguration eines Referenzgaswechselventils einer Referenzverbrennungskraftmaschine nach dem ersten Ausführungsbeispiel ausgebildet ist.

Ein nicht zur Erfindung gehörendes Beispiel ist ein System zum Ausführen eines Verfahrens zum Erkennen einer Abweichung eines tatsächlichen Betätigungszeitpunkts eines Gaswechselventils einer Verbrennungskraftmaschine von einem vorgegebenen Betätigungszeitpunkt aufgrund einer Abweichung einer Ventiltriebkonfiguration des Gaswechselventils von einer Referenz-Ventiltriebkonfiguration eines Referenzgaswechselventils einer Referenzverbrennungskraftmaschine, das umfasst:
eine Auswerteeinrichtung zum Auswerten eines gemessenen Druckverlaufs, der in einem gasführenden Bereich der Verbrennungskraftmaschine gemessen ist, im Vergleich zu einem Referenzdruckverlauf, der in einem gasführenden Referenzbereich einer Referenzverbrennungskraftmaschine zu erwarten ist, wobei der gasführende Bereich der Verbrennungskraftmaschine dem gasführenden Referenzbereich der Referenzverbrennungskraftmaschine entspricht, und
eine Justiervorrichtung zum Justieren der Ventiltriebkonfiguration des Gaswechselventils in Abhängigkeit eines Ergebnisses der Auswertung des gemessenen Druckverlaufs,
wobei die Auswerteeinrichtung dazu ausgebildet ist, nach dem Justieren der Ventiltriebkonfiguration die Abweichung des tatsächlichen Betätigungszeitpunkts von dem vorgegebenen Betätigungszeitpunkt zu erkennen.

Weitere vorteilhafte Ausgestaltungen der Erfindung ergeben sich aus den Unteransprüchen und der folgenden Beschreibung bevorzugter Ausführungsbeispiele der vorliegenden Erfindung. Die vorliegende Erfindung betrifft ein Verfahren zum Erkennen einer Abweichung eines tatsächlichen Betätigungszeitpunkts eines Gaswechselventils einer Verbrennungskraftmaschine, insbesondere während eines Verbrennungszyklus, von einem vorgegebenen Betätigungszeitpunkt, insbesondere in dem Verbrennungszyklus, aufgrund einer Abweichung einer Ventiltriebkonfiguration des Gaswechselventils von einer Referenz-Ventiltriebkonfiguration eines Referenzgaswechselventils einer Referenzverbrennungskraftmaschine auf Grundlage eines gemessenen Druckverlaufs in der Verbrennungskraftmaschine und eines Referenzdruckverlaufs der Referenzverbrennungskraftmaschine. Die Kenntnis über die Abweichung des tatsächlichen Betätigungszeitpunkts des Gaswechselventils von dem vorgegebenen Betätigungszeitpunkt aufgrund der Abweichung der Ventiltriebkonfiguration des Gaswechselventils von der Referenz-Ventiltriebkonfiguration und die daraus resultierende Kenntnis, dass eine korrekte Toleranz in der Ventiltriebkonfiguration vorliegt, kann anschließend beispielsweise für eine Berechnung einer Zylinderfüllung der Verbrennungskraftmaschine und/oder für eine Kraftstoffdruckregelung genutzt werden.

Der vorgegebene Betätigungszeitpunkt kann ein Zeitpunkt in einem Verbrennungszyklus sein, zu dem ein Referenzgaswechselventil der Referenzverbrennungskraftmaschine tatsächlich betätigt wird, insbesondere wenn die Referenzverbrennungskraftmaschine in analoger Weise wie die Verbrennungskraftmaschine angesteuert ist.

Der tatsächliche Betätigungszeitpunkt kann beispielsweise ein Öffnungszeitpunkt oder ein Schließzeitpunkt sein. Wenn der tatsächliche Betätigungszeitpunkt ein Öffnungszeitpunkt ist, ist auch der vorgegebene Betätigungszeitpunkt ein Öffnungszeitpunkt und, wenn der tatsächliche Betätigungszeitpunkt ein Schließzeitpunkt ist, ist auch der vorgegebene Betätigungszeitpunkt ein Schließzeitpunkt. Es können auch die Abweichungen von zwei oder mehreren Betätigungszeitpunkten des Gaswechselventils von entsprechenden vorgegebenen Betätigungszeitpunkten erkannt werden. Beispielsweise können die Abweichungen des Öffnungszeitpunkts und des Schließzeitpunkts des Gaswechselventils von einem vorgegebenen Öffnungszeitpunkt bzw. einem vorgegebenen Schließzeitpunkt erkannt werden, um beispielsweise Toleranzen in einem Ventilspiel bei einer Füllungsberechnung zu berücksichtigen.

Das Gaswechselventil kann ein Einlassventil oder ein Auslassventil sein. Wenn das Gaswechselventil ein Einlassventil ist, ist auch das Referenzgaswechselventil ein Einlassventil und, wenn das Gaswechselventil ein Auslassventil ist, ist auch das Referenzgaswechselventil ein Auslassventil. Es können auch die Abweichungen von Betätigungszeitpunkten verschiedener Gaswechselventile erkannt werden.

Anstelle der Abweichung des tatsächlichen Betätigungszeitpunkts des Gaswechselventils von dem vorgegebenen Betätigungszeitpunkt kann eine Abweichung eines Zeitpunkts, zu dem eine bestimmte Stellung des Ventiltriebs, beispielsweise eine bestimmte Kolbenposition, erreicht ist, von einem vorgegebenen Zeitpunkt erkannt werden. Dabei kann der vorgegebene Zeitpunkt ein Zeitpunkt in einem Verbrennungszyklus sein, zu dem die Referenzverbrennungskraftmaschine die bestimmte Kolbenposition erreicht hat.

Die Abweichung der Ventiltriebkonfiguration von einer Referenz-Ventiltriebkonfiguration kann eine Toleranz, insbesondere eine Bauteiltoleranz, die herstellungsbedingt oder verschleißbedingt sein kann, und/oder eine Montagetoleranz, eines Ventiltriebs des Gaswechselventils umfassen. Die Toleranz des Ventiltriebs kann mehrere oder alle Bauteile umfassen, die einen Kolben der Verbrennungskraftmaschine mit einem Verschlusselement des Gaswechselventils verbinden, beispielsweise den Kolben, die Kurbelwelle, die Geberräder, die Nocken, die Kipphebel, die Hydrostößel, die Nockenwelle und/oder das Gaswechselventil. Zusätzlich kann die Toleranz des Ventiltriebs eine Toleranz eines Kurbelwellensensors und/oder eines Nockenwellensensors umfassen. Alternativ oder zusätzlich kann die Abweichung der Ventiltriebkonfiguration auch eine Toleranz in einer Ansteuerung der jeweiligen Bauteile umfassen.

Die Abweichung der Ventiltriebkonfiguration kann zum Beispiel eine Toleranz einer Nockenwellenphase, eine Toleranz eines oder mehrerer Ventilhübe, eine Toleranz einer oder mehrerer Ventilhubschaltungen und/oder eine Toleranz weiterer Konfigurationen des Ventiltriebs der Verbrennungskraftmaschine umfassen.

Die Verbrennungskraftmaschine kann ein Ottomotor, beispielsweise ein nach dem Millerverfahren arbeitender Motor, oder ein Dieselmotor sein. Vorzugsweise ist die Verbrennungskraftmaschine eine in Serienherstellung auf Grundlage der Referenzverbrennungskraftmaschine gefertigte Verbrennungskraftmaschine. Die Referenzverbrennungskraftmaschine kann ein Modell einer Verbrennungskraftmaschine oder ein Prototyp einer Verbrennungskraftmaschine sein. Der Referenzdruckverlauf in der Referenzverbrennungskraftmaschine kann für einen oder mehrere Betriebspunkte, insbesondere eine oder mehrere Einstellungen eines Referenzventiltriebs der Referenzverbrennungskraftmaschine, mittels eines Modells berechnet sein, an einem Prüfstand gemessen sein oder aus modellierten Daten und am Prüfstand gemessenen Daten erzeugt sein.

Gemäß dem Verfahren wird ein gemessener Druckverlauf im Vergleich zu einem Referenzdruckverlauf ausgewertet. Der gemessene Druckverlauf ist in einem gasführenden Bereich der Verbrennungskraftmaschine gemessen. Während der Messung des Druckverlaufs kann die Verbrennungskraftmaschine nominell in einem vorgegebenen Betriebspunkt arbeiten, wobei sich ein tatsächlicher Betriebspunkt von dem vorgegebenen Betriebspunkt aufgrund von Herstellungstoleranzen unterscheiden kann. Der Referenzdruckverlauf ist ein in einem gasführenden Referenzbereich der Referenzverbrennungskraftmaschine, der dem gasführenden Bereich der Verbrennungskraftmaschine entspricht, zu erwartender Druckverlauf. Insbesondere ist der Referenzdruckverlauf zu erwarten, wenn die Referenzverbrennungskraftmaschine in dem vorgegebenen Betriebspunkt arbeitet, insbesondere bei einer vorgegebenen Einstellung eines Referenzventiltriebs der Referenzverbrennungskraftmaschine.

Gemäß dem Verfahren wird in Abhängigkeit eines Ergebnisses der Auswertung des gemessenen Druckverlaufs die Abweichung des tatsächlichen Betätigungszeitpunkts von dem vorgegebenen Betätigungszeitpunkt erkannt.

Mit Hilfe des erfindungsgemäßen Verfahrens ist es möglich, bei der Einstellung von Öffnungs- und/oder Schließzeitpunkten von Einlass- und/oder Auslassventilen Toleranzen in dem Ventiltrieb der in Serie hergestellten Verbrennungskraftmaschine zu berücksichtigen, ohne dass diese hinsichtlich der Luftmassen vermessen werden muss, so dass auf eine externe Messeinrichtung zur Bestimmung der Luftmasse verzichtet werden kann. Vorliegend reicht ein Abgleich von Druckverläufen in der Verbrennungskraftmaschine auf den Referenzdruckverlauf aus. Infolge kann eine Zylinderfüllung der Verbrennungskraftmaschine jeder in Serie hergestellten Verbrennungskraftmaschine mit geringem zusätzlichem Aufwand bestimmt werden, wobei Fertigungstoleranzen, die bei der Serienherstellung auftreten, sehr genau berücksichtigt werden können.

Gemäß dem erfindungsgemäßen Verfahren kann weiterhin der Druckverlauf in dem gasführenden Bereich der Verbrennungskraftmaschine gemessen werden. Dazu kann ein Drucksensor eingesetzt werden, der in dem gasführenden Bereich positioniert ist. Der Drucksensor kann ein Seriendrucksensor sein, der permanent in dem gasführenden Bereich der Verbrennungskraftmaschine angebracht ist, oder ein separater Drucksensor, der lediglich zum Detektieren des gemessenen Druckverlaufs zum Erkennen der Abweichung des tatsächlichen Betätigungszeitpunkts von dem vorgegebenen Betätigungszeitpunkt vorgesehen ist. Alternativ kann zum Messen des gemessenen Druckverlaufs ein Druckindiziersystem vorgesehen sein. Ein Druckindiziersystem ist eine Messeinrichtung, die dazu ausgebildet ist, hochaufgelöst schnelle Druckänderungen zu erfassen.

Während der Messung des Druckverlaufs ist ein Stellorgan so eingestellt, dass sich ein Druck vor dem Stellorgan erhöht, wobei das Stellorgan ein Abgasturbolader oder eine Abgasklappe ist. Durch eine solche Druckerhöhung nimmt eine Geschwindigkeit an dem Stellorgan zu, der Massenstrom bleibt aber nahezu identisch. Dadurch lassen sich Stellvorgänge von Gaswechselventilen, insbesondere ein Öffnen und ein Schließen von Gaswechselventilen, deutlicher erkennbar machen. Beispielsweise können bei der Messung des Druckverlaufs ein verstellbarer Abgasturbolader und/oder eine Abgasklappe in eine Stellung gebracht sein, in der lediglich ein minimaler Luftfluss aus dem Abgastrakt zugelassen ist, um die Druckdifferenz beim Betätigen (Stellen) des Gaswechselventils zu erhöhen. Diese Maßnahme lässt sich bei Vorhandensein eines verstellbaren Abgasturboladers und/oder einer Abgasklappe unabhängig von einer Situation vornehmen, in der das erfindungsgemäße Verfahren zum Einsatz kommt. Alternativ oder zusätzlich kann beim Messen des Druckverlaufs in den Abgastrakt ein Kompressor eingesetzt sein. Diese Maßnahme eignet sich insbesondere, wenn das Verfahren an einem Bandende einer Herstellungslinie der Verbrennungskraftmaschine oder bei einer Wartung der Verbrennungskraftmaschine eingesetzt wird.

Gemäß dem erfindungsgemäßen Verfahren kann weiterhin der Referenzdruckverlauf, der in dem gasführenden Bereich der Referenzverbrennungskraftmaschine, der dem gasführenden Bereich der Verbrennungskraftmaschine entspricht, zu erwarten ist, bereitgestellt werden. Vorzugsweise ist der Referenzdruckverlauf vorab bestimmt und in einem Datenspeicher, der mit einer Motorsteuerung oder einer separaten Auswerteeinrichtung verbunden ist, hinterlegt und wird beim Bereitstellen von dem Datenspeicher abgerufen.

In manchen Ausführungsbeispielen kann der gemessene Druckverlauf ein Abgasgegendruckverlauf sein, der in einem Abgastrakt der Verbrennungskraftmaschine gemessen ist. In diesem Fall ist der Referenzdruckverlauf ein Referenz-Abgasgegendruckverlauf, der in einem Referenz-Abgastrakt der Referenzverbrennungskraftmaschine zu erwarten ist. Der Abgasgegendruckverlauf sowie der Referenz-Abgasgegendruckverlauf lassen das Betätigen des Gaswechselventils deutlich erkennen, so dass Toleranzen der Ventiltriebskonfiguration, insbesondere einer Nockenwellenphasenlage, von Ventilhüben, von Ventilhubschaltungen und anderen Einstellungen des Ventiltriebs, einfach erkannt werden können und beim Erkennen der Abweichung des tatsächlichen Betätigungszeitpunkts von dem vorgegebenen Betätigungszeitpunkts berücksichtigt werden können. Insbesondere, wenn das Verfahren in einem Serienfahrzeug ausgeführt werden soll, das einen im Abgastrakt seiner Verbrennungskraftmaschine serienmäßig verbauten Drucksensor umfasst, bietet sich die Wahl des Abgasgegendruckverlaufs als Druckverlauf und des Referenz-Abgasgegendruckverlaufs als Referenzdruckverlauf an. Aber auch in anderen Anwendungssituationen ist diese Wahl von Vorteil, da sich ein separater Drucksensor leicht in den Abgastrakt einsetzen lässt.

Alternativ kann der gemessene Druckverlauf ein Zylinderdruckverlauf sein, der in einer Zylinderkammer der Verbrennungskraftmaschine gemessen ist. In diesem Fall ist der Referenzdruckverlauf ein Referenz-Zylinderdruckverlauf, der in einer Referenz-Zylinderkammer der Referenzverbrennungskraftmaschine zu erwarten ist. Auch der Zylinderdruckverlauf und der Referenz-Zylinderdruckverlauf lassen das Betätigen des Gaswechselventils (Stellvorgang des Gaswechselventils) deutlich erkennen, so dass Toleranzen der Ventiltriebskonfiguration einfach erkannt werden können und beim Erkennen der Abweichung des tatsächlichen Betätigungszeitpunkts von dem vorgegebenen Betätigungszeitpunkts berücksichtigt werden können. Die Wahl des Zylinderdruckverlaufs als Druckverlauf und des Referenz-Zylinderdruckverlaufs als Referenzdruckverlauf ermöglicht eine weitgehend vom Umgebungsdruck unabhängige Bestimmung der Betätigung des Gaswechselventils und verhindert somit Fehler aufgrund von Schwankungen des Umgebungsdrucks.

Alternativ kann der gemessene Druckverlauf ein Saugrohrdruckverlauf sein, der in einem Saugrohr der Verbrennungskraftmaschine gemessen ist. In diesem Fall ist der Referenzdruckverlauf ein Referenz-Saugrohrdruckverlauf, der in einem Referenz-Saugrohr der Referenzverbrennungskraftmaschine zu erwarten ist.

In manchen Ausführungsbeispielen wird beim Auswerten des gemessenen Druckverlaufs eine Verschiebung eines charakteristischen Abschnitts des gemessenen Druckverlaufs, der ein Betätigen (Stellen) des Gaswechselventils der Verbrennungskraftmaschine, beispielsweise ein Öffnen und Schließen eines Einlassventils und/oder eines Auslassventils, repräsentiert, gegenüber einem Referenzabschnitt des Referenzdruckverlaufs, der dem charakteristischen Abschnitt des gemessenen Druckverlaufs entspricht, bestimmt und die Abweichung des tatsächlichen Betätigungszeitpunkts von dem vorgegebenen Betätigungszeitpunkt in Abhängigkeit der bestimmten Verschiebung des charakteristischen Abschnitts des gemessenen Druckverlaufs erkannt. Der charakteristische Abschnitt des gemessenen Druckverlaufs kann einen Druckanstieg oder einen Druckabfall umfassen. Alternativ kann der charakteristische Abschnitt eine bestimmte Kolbenstellung des Kolbens der Verbrennungskraftmaschine bzw. der Referenzverbrennungskraftmaschine repräsentieren und beispielsweise ein Maximum im Druckverlauf umfassen.

Beispielsweise wird der charakteristische Abschnitt aus dem gemessenen Druckverlauf separiert und der Referenz-Abschnitt aus dem Referenzdruckverlauf separiert. Anschließend kann der charakteristische Abschnitt mit dem Referenzabschnitt verglichen werden und entschieden werden, ob das Stellen des Gaswechselventils früher oder später als oder gleichzeitig mit dem Stellen eines entsprechenden Gaswechselventils der Referenzverbrennungskraftmaschine erfolgt. Diese Erkenntnis kann dann beim Erkennen der Abweichung des tatsächlichen Betätigungszeitpunkts von dem vorgegebenen Betätigungszeitpunkt berücksichtigt werden. Dadurch kann die Abweichung des tatsächlichen Betätigungszeitpunkts von dem vorgegebenen Betätigungszeitpunkt erkannt werden, ohne die bei der Serienfertigung auftretenden Toleranzen genau zu kennen bzw. die absoluten Stellzeitpunkte der Gaswechselventile, beispielsweise die Öffnungs- und Schließzeitpunkte des Einlassventils und/oder des Auslassventils, zu bestimmen.

In manchen Ausführungsbeispielen kann der charakteristische Abschnitt des gemessenen Druckverlaufs gegenüber dem entsprechenden Referenzabschnitt des Referenzdruckverlaufs verfrüht sein, beispielsweise bei kleineren Kurbelwellenwinkeln auftreten. Beim Erkennen der Abweichung des tatsächlichen Betätigungszeitpunkts von dem vorgegebenen Betätigungszeitpunkt kann dann berücksichtigt werden, dass das Stellen des Gaswechselventils der Verbrennungskraftmaschine früher erfolgt als gemäß dem vorgegebenen Betriebszustand, beispielsweise der vorgegebenen Einstellung des Referenzventiltriebs der Referenzverbrennungskraftmaschine.

Alternativ kann der charakteristische Abschnitt des gemessenen Druckverlaufs gegenüber dem entsprechenden Referenzabschnitt des Referenzdruckverlaufs verspätet sein, beispielsweise bei größeren Kurbelwellenwinkeln als der Referenzabschnitt auftreten. Beim Erkennen der Abweichung des tatsächlichen Betätigungszeitpunkts von dem vorgegebenen Betätigungszeitpunkt kann dann berücksichtigt werden, dass das Stellen des Gaswechselventils der Verbrennungskraftmaschine später erfolgt als gemäß dem vorgegebenen Betriebszustand, beispielsweise der vorgegebenen Einstellung des Referenzventiltriebs der Referenzverbrennungskraftmaschine.

Alternativ kann der charakteristische Abschnitt des gemessenen Druckverlaufs mit dem entsprechenden Referenzabschnitt des Referenzdruckverlaufs übereinstimmen und beim Erkennen der Abweichung des tatsächlichen Betätigungszeitpunkts von dem vorgegebenen Betätigungszeitpunkt berücksichtigt werden, dass das Stellen des Gaswechselventils der Verbrennungskraftmaschine gemäß dem vorgegebenen Betriebszustand, beispielsweise der vorgegebenen Einstellung des Referenzventiltrieb der Referenzverbrennungskraftmaschine, erfolgt. In diesem Fall ist die Abweichung des tatsächlichen Betätigungszeitpunkts von dem vorgegebenen Betätigungszeitpunkt null.

In manchen Ausführungsbeispielen kann beim Auswerten des gemessenen Druckverlaufs eine erste Ableitung des gemessenen Druckverlaufs und eine erste Ableitung des Referenzdruckverlaufs gebildet werden. Anschließend kann eine Verschiebung eines charakteristischen Abschnitts der ersten Ableitung des gemessenen Druckverlaufs, der ein Stellen eines Gaswechselventils der Verbrennungskraftmaschine repräsentiert, gegenüber einem Referenzabschnitt der ersten Ableitung des Referenzdruckverlaufs, der dem charakteristischen Abschnitt der Ableitung des gemessenen Druckverlaufs entspricht, bestimmt werden. Der charakteristische Abschnitt der Ableitung des gemessenen Druckverlaufs und der Referenzabschnitt der Ableitung des Referenzdruckverlaufs können aus den jeweiligen Ableitungen separiert sein. Die Abweichung des tatsächlichen Betätigungszeitpunkts von dem vorgegebenen Betätigungszeitpunkt kann dann in Abhängigkeit der bestimmten Verschiebung des charakteristischen Abschnitts der ersten Ableitung des gemessenen Druckverlaufs bestimmt werden.

Die Ableitungen des gemessenen Druckverlaufe und des Referenzdruckverlaufs ermöglichen einen einfacheren Vergleich als die absoluten Verläufe, nämlich der gemessene Druckverlauf und der Referenzdruckverlauf, da sie robuster gegenüber Schwankungen der Umgebungsbedingungen sind als die absoluten Verläufe.

Alternativ kann eine Ableitung des charakteristischen Abschnitts des Druckverlaufs und eine Ableitung des Referenzabschnitts gebildet werden. Anschließend kann dann die Ableitung des charakteristischen Abschnitts mit der Ableitung des Referenzabschnitts verglichen worden, wie oben beschrieben.

In manchen Ausführungsbeispielen kann beim Erkennen der Abweichung des tatsächlichen Betätigungszeitpunkts von dem vorgegebenen Betätigungszeitpunkt eine Ansteuerung des Gaswechselventils in Abhängigkeit des Ergebnisses der Auswertung des gemessenen Druckverlaufs angepasst werden. Die Anpassung erfolgt vorzugsweise derart, dass die Abweichung des tatsächlichen Betätigungszeitpunkts von dem vorgegebenen Betätigungszeitpunkt verringert wird, beispielsweise durch eine Veränderung von Steuerparametern und/oder einer mechanischen Anpassung (Justierung) des Ventiltriebs. Anschließend kann ein nach dem Anpassen der Ansteuerung des Gaswechselventils gemessener Druckverlauf der Verbrennungskraftmaschine mit dem Referenzdruckverlauf verglichen werden und die Abweichung des tatsächlichen Betätigungszeitpunkts von dem vorgegebenen Betätigungszeitpunkt in Abhängigkeit eines Ergebnisses des Vergleichs des nach dem Anpassen der Ansteuerung des Gaswechselventils gemessenen Druckverlaufs mit dem Referenzdruckverlauf bestimmt werden.

Diese iterative Erkennung der Abweichung des tatsächlichen Betätigungszeitpunkts von dem vorgegebenen Betätigungszeitpunkt kann wiederholt werden, bis eine mehrfache Anpassung der Ansteuerung des Gaswechselventils zu einer Übereinstimmung des nach der entsprechenden Anpassung gemessenen Druckverlaufs mit dem Referenzdruckverlauf führt. Mit Hilfe der einzelnen Anpassungen kann dann die gesamte Abweichung des tatsächlichen Betätigungszeitpunkts von dem vorgegebenen Betätigungszeitpunkt bestimmt werden.

Alternativ kann die iterative Erkennung bis zu einer vorgegebenen Anzahl an Anpassungen wiederholt werden. Es kann aber auch eine direkte Erkennung der Abweichung des tatsächlichen Betätigungszeitpunkts von dem vorgegebenen Betätigungszeitpunkt ohne Anpassung der Ansteuerung erfolgen.

Beim Bestimmen einer Zylinderfüllung kann eine Referenzfüllung anhand der erkannten Abweichung des tatsächlichen Betätigungszeitpunkts von dem vorgegebenen Betätigungszeitpunktmodifiziert werden. Beispielsweise kann die Referenzfüllung so modifiziert werden, dass eine Abweichung eines der modifizierten Referenzfüllung zugrundeliegenden modifizierten Referenzdruckverlaufs gegenüber dem gemessenen Druckverlauf gegenüber einer Abweichung beim Vergleich des gemessenen Druckverlaufs mit dem Referenzdruckverlauf verringert ist.

In manchen Ausführungsbeispielen kann das erfindungsgemäße Verfahren während einer Funktionsprüfung bei Abschluss einer Herstellung der Verbrennungskraftmaschine oder nach Aufnahme der Benutzung der Verbrennungskraftmaschine durchgeführt werden. Vorzugsweise kann das Verfahren an einem Bandende einer Herstellungslinie der Verbrennungskraftmaschine, bei einer Wartung der Verbrennungskraftmaschine oder in vorgegebenen Abständen, beispielsweise nach einer vorgegebenen Anzahl an gefahrenen Kilometern, ausgeführt werden. Das erfindungsgemäße Verfahren ist somit flexibel einsetzbar und erlaubt eine zuverlässige Erkennung der Abweichung des tatsächlichen Betätigungszeitpunkts von dem vorgegebenen Betätigungszeitpunkt.

Der gemessene Druckverlauf ist gemessen, während der gasführende Bereich der Verbrennungskraftmaschine gegenüber dem Umgebungsdruck abgeschlossen ist oder mit einem gegenüber dem Umgebungsdruck erhöhten Druck beaufschlagt ist. Dieses Vorgehen wurde oben bereits im Detail erläutert.

Die Erfindung betrifft weiterhin eine Steuervorrichtung für eine Verbrennungskraftmaschine insbesondere eines Kraftfahrzeugs. Die Steuervorrichtung ist zum Ausführen des oben beschriebenen Verfahrens zum Erkennen der Abweichung des tatsächlichen Betätigungszeitpunkts eines Gaswechselventils von dem vorgegebenen Betätigungszeitpunkt aufgrund einer Abweichung einer Ventiltriebkonfiguration des Gaswechselventils von einer Referenz-Ventiltriebkonfiguration eines Referenzgaswechselventils einer Referenzverbrennungskraftmaschine vorgesehen.

Die Steuervorrichtung ist dazu ausgebildet, einen gemessenen Druckverlauf, der in einem gasführenden Bereich der Verbrennungskraftmaschine gemessen ist, im Vergleich zu einem Referenzdruckverlauf, der in einem gasführenden Referenzbereich der Referenzverbrennungskraftmaschine zu erwarten ist, auszuwerten, wobei der gasführende Bereich der Verbrennungskraftmaschine dem gasführenden Referenzbereich der Referenzverbrennungskraftmaschine entspricht, und die Abweichung des tatsächlichen Betätigungszeitpunkts von dem vorgegebenen Betätigungszeitpunkt in Abhängigkeit eines Ergebnisses der Auswertung des gemessenen Druckverlaufs zu erkennen.

Die Steuervorrichtung kann weiterhin dazu ausgebildet sein, den gemessenen Druckverlauf in dem gasführenden Bereich der Verbrennungskraftmaschine zu empfangen und/oder den Referenzdruckverlauf, der in dem gasführenden Bereich der Referenzverbrennungskraftmaschine zu erwarten ist, bereitzustellen.

Die Steuervorrichtung kann eine Motorsteuerung einer Verbrennungskraftmaschine beispielsweise eines Kraftfahrzeugs sein, das insbesondere in Serienherstellung produziert ist.

Die Steuervorrichtung enthält vorzugsweise einen Prozessor zum Ausführen des oben beschriebenen Verfahrens.

Die vorliegende Erfindung betrifft weiterhin eine Verbrennungskraftmaschine mit einer Steuervorrichtung, wie sie oben beschrieben ist.

Die Verbrennungskraftmaschine weist einen Zylinder mit einer Zylinderkammer und einem darin bewegbaren Zylinderkolben, ein Saugrohr, das über ein oder mehrere Einlassventile, vorzugsweise zwei Einlassventile, mit der Zylinderkammer verbunden ist, und einen Abgastrakt, der über ein oder mehrere Auslassventile, vorzugsweise zwei Auslassventile, mit der Zylinderkammer verbunden ist, auf. In dem Abgastrakt kann ein verstellbarer Abgasturbolader und/oder eine Abgasklappe angeordnet sein, die so eingestellt werden, dass ein Abgasgegendruck im Abgastrakt höher als ein Umgebungsdruck ist. Die Verbrennungskraftmaschine kann außerdem einen Drucksensor umfassen, der in dem Abgastrakt, der Zylinderkammer oder in dem Saugrohr angeordnet sein kann. Anstelle des Drucksensors oder zusätzlich kann ein Druckindiziersystem umfasst sein.

Weiterhin kann die Verbrennungskraftmaschine einen Ventiltrieb aufweisen, der eine Kurbelwelle, eine Nockenwelle und eine Kopplung zwischen der Kurbelwelle und der Nockenwelle umfasst. Die Nockenwelle ist mit dem Einlassventil verbunden, um dieses zu öffnen und zu schließen, und/oder mit dem Auslassventil, um dieses zu öffnen und zu schließen. Die Nockenwelle kann eine Verstelleinrichtung aufweisen, die dazu ausgebildet ist, eine Phase zwischen der Kurbelwelle und der Nockenwelle zu verstellen.

Die erfindungsgemäße Verbrennungskraftmaschine ermöglicht ein regelmäßiges Erkennen der Abweichung des tatsächlichen Betätigungszeitpunkts von dem vorgegebenen Betätigungszeitpunkt, beispielsweise nach Durchfahren einer vorgegebenen Fahrstrecke. Damit kann regelmäßig auf Veränderungen des Ventiltriebs reagiert werden und ein effektiver Betrieb der Verbrennungskraftmaschine während deren Lebensdauer ermöglicht werden.

Ein nicht zur Erfindung gehörendes Beispiel ist ein System zum Erkennen einer Abweichung eines tatsächlichen Betätigungszeitpunkts eines Gaswechselventils einer Verbrennungskraftmaschine von einem vorgegebenen Betätigungszeitpunkt aufgrund einer Abweichung einer Ventiltriebkonfiguration des Gaswechselventils von einer Referenz-Ventiltriebkonfiguration eines Referenzgaswechselventils einer Referenzverbrennungskraftmaschine. Das System enthält eine Auswerteeinrichtung und eine Justiervorrichtung. Die Auswerteeinrichtung ist dazu ausgebildet, einen gemessenen Druckverlauf, der in einem gasführenden Bereich der Verbrennungskraftmaschine gemessen ist, im Vergleich zu einem Referenzdruckverlauf, der in einem gasführenden Referenzbereich einer Referenzverbrennungskraftmaschine zu erwarten ist, auszuwerten, wobei der gasführende Bereich der Verbrennungskraftmaschine dem gasführenden Referenzbereich der Referenzverbrennungskraftmaschine entspricht. Die Justiervorrichtung ist dazu ausgebildet, die Ventilkonfiguration des Gaswechselventils der Verbrennungskraftmaschine in Abhängigkeit eines Ergebnisses der Auswertung des gemessenen Druckverlaufs zu justieren. Die Auswerteeinrichtung ist weiterhin dazu ausgebildet, nach dem Justieren der Ventiltriebkonfiguration die Abweichung des tatsächlichen Betätigungszeitpunkts von dem vorgegebenen Betätigungszeitpunkt zu erkennen.

Das System ist insbesondere dazu ausgebildet, ein Verfahren zum Erkennen einer Abweichung eines tatsächlichen Betätigungszeitpunkts eines Gaswechselventils von einem vorgegebenen Betätigungszeitpunkt, wie es oben ausführlich beschrieben wurde, auszuführen.

Das System kann weiterhin einen Drucksensor aufweisen, der zum Messen eines Druckverlaufs in einem gasführenden Bereich der Verbrennungskraftmaschine, der dem gasführenden Referenzbereich der Referenzverbrennungskraftmaschine entspricht, ausgebildet ist. Der Drucksensor kann zum Durchführen des Verfahrens in einen gasführenden Bereich der Verbrennungskraftmaschine, deren Zylinderfüllung bestimmt werden soll, eingeführt sein. Anstelle des Drucksensors oder zusätzlich dazu kann das System ein Druckindiziersystem umfassen. Weiterhin kann das System einen Kompressor bzw. eine Vakuumpumpe umfassen, um einen Abgasgegendruck der Verbrennungskraftmaschine während der Messung des Druckverlaufs zu verändern, insbesondere zu erhöhen oder zu erniedrigen.

Das System kann weiterhin einen Datenspeicher aufweisen, in dem der Referenzdruckverlauf hinterlegt ist.

Das System kann an einem Bandende einer Herstellungslinie der Verbrennungskraftmaschine zum Einsatz kommen. Alternativ kann das System in einer Werkstatt zur Wartung der Verbrennungskraftmaschine verwendet werden, um erkennen zu können, ob die Abweichung des tatsächlichen Betätigungszeitpunkts von dem vorgegebenen Betätigungszeitpunkt in einem zulässigen Rahmen ist oder angepasst werden muss.

Ausführungsbeispiele der Erfindung werden nun beispielhaft und unter Bezugnahme auf die beigefügten Zeichnungen beschrieben. Es zeigen:
- Fig. 1: einen schematisch Aufbau einer Verbrennungskraftmaschine mit einem Ventiltrieb;
- Fig. 2: ein Flussdiagramm eines ersten Ausführungsbeispiels eines Verfahrens zum Erkennen einer Abweichung des tatsächlichen Betätigungszeitpunkts von dem vorgegebenen Betätigungszeitpunkt;
- Fig. 3: ein Beispiel für einen Referenz-Zylinderdruckverlauf und einen gemessenen Zylinderdruckverlauf während eines Verbrennungszyklus der Verbrennungskraftmaschine;
- Fig. 4: ein erstes beispielhaftes Flussdiagramm des Auswertens des gemessenen Druckverlaufs;
- Fig. 5: ein Beispiel für einen Referenz-Abschnitt des Referenz-Zylinderdruckverlaufs und einen charakteristischen Abschnitt des gemessenen Zylinderdruckverlaufs aus Fig. 3;
- Fig. 6: ein zweites beispielhaftes Flussdiagramm des Auswertens des gemessenen Druckverlaufs;
- Fig. 7: ein Beispiel für einen Referenz-Abschnitt einer Ableitung eines ReferenzZylinderdruckverlaufs und einen charakteristischen Abschnitt einer Ableitung eines gemessenen Zylinderdruckverlaufs;
- Fig. 8: ein Beispiel für einen Referenz-Abschnitt eines Referenz-Abgasgegendruckverlaufs und einen charakteristischen Abschnitt eines ersten gemessenen Abgasgegendruckverlaufs;
- Fig. 9: ein Beispiel für einen Referenz-Abschnitt eines Referenz-Abgasgegendruckverlaufs und einen charakteristischen Abschnitt eines zweiten gemessenen Abgasgegendruckverlauf; und
- Fig. 10: ein Flussdiagramm eines zweiten Ausführungsbeispiels eines Verfahrens zum Erkennen einer Abweichung des tatsächlichen Betätigungszeitpunkts von dem vorgegebenen Betätigungszeitpunkt.

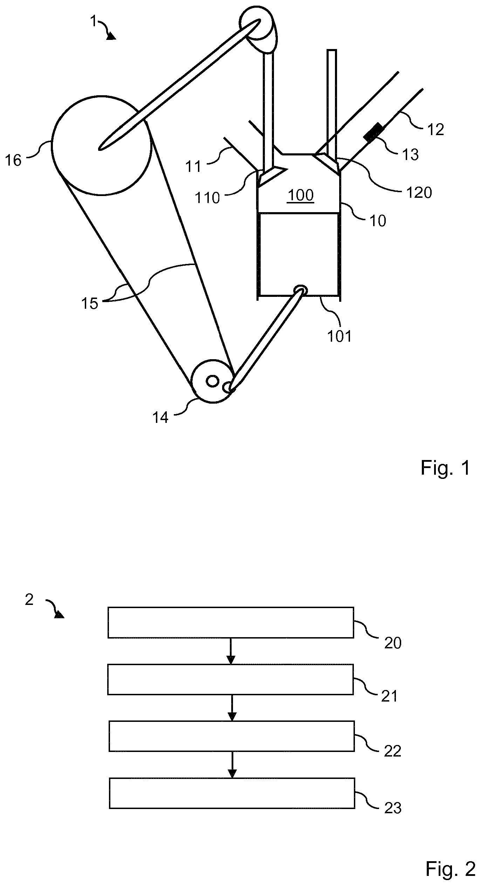

In Fig. 1 ist schematisch ein beispielhafter Aufbau einer Verbrennungskraftmaschine 1 mit einem Ventiltrieb dargestellt. Die Verbrennungskraftmaschine 1 weist einen Zylinder 10 mit einer Zylinderkammer 100 auf, in dem ein Zylinderkolben 101 bewegbar angeordnet ist, wodurch durch die Bewegung des Zylinderkolbens 101 ein Volumen der Zylinderkammer 100 veränderbar ist.

Die Verbrennungskraftmaschine 1 weist weiterhin ein Saugrohr 11 auf, das über ein Einlassventil 110 so mit dem Zylinder 10 verbunden ist, dass Frischluft aus dem Saugrohr 11 bei geöffnetem Einlassventil 110 in die Zylinderkammer 100 gelangt. Die Verbrennungskraftmaschine 1 weist außerdem einen Abgastrakt 12 auf, der über ein Auslassventil 120 so mit dem Zylinder 10 verbunden ist, dass Abgas und gegebenenfalls Spülluft aus der Zylinderkammer 100 bei geöffnetem Auslassventil 120 in den Abgastrakt 12 gelangt. In dem Abgastrakt 12 sind ein Abgasturbolader (nicht gezeigt) und/oder eine Abgasklappe (nicht gezeigt) angeordnet, die so eingestellt werden, dass ein Abgasgegendruck im Abgastrakt höher als ein Umgebungsdruck ist.

Die Verbrennungskraftmaschine 1 umfasst außerdem einen Drucksensor 13, der wie in Fig. 1 gezeigt, in dem Abgastrakt 12 angeordnet ist. Alternativ kann der Drucksensor 13 in der Zylinderkammer 100 oder in dem Saugrohr 11 angeordnet sein.

Durch die Bewegung des Zylinderkolbens 101 in dem Zylinder 10 wird eine Kurbelwelle 14 angetrieben, die über einen Riemen 15 als Kopplung zwischen der Kurbelwelle 14 und einer Nockenwelle 16 mit der Nockenwelle 16 gekoppelt ist. Die Nockenwelle 16 ist mit dem Einlassventil 110 verbunden, um dieses zu öffnen und zu schließen. Die Nockenwelle 16 kann weiterhin mit dem Auslassventil 120 verbunden sein, um dieses zu öffnen und zu schließen. Alternativ kann das Auslassventil 120 mittels einer weiteren Nockenwelle verbunden sein und von dieser geöffnet und geschlossen werden.

Die Nockenwelle 16 kann eine Verstelleinrichtung (nicht gezeigt) aufweisen, die dazu ausgebildet ist, eine Phase zwischen der Kurbelwelle 14 und der Nockenwelle 16 zu verstellen. Die Verbrennungskraftmaschine 1 weist weiterhin eine Motorsteuerung (nicht gezeigt) auf, die dazu ausgebildet ist, eine Abweichung des tatsächlichen Betätigungszeitpunkts von dem vorgegebenen Betätigungszeitpunkt zu erkennen und einen Betrieb der Verbrennungskraftmaschine 1 zu steuern.

Fig. 2 zeigt ein Flussdiagramm, das ein erstes Ausführungsbeispiel eines Verfahrens 2 zum Erkennen einer Abweichung des tatsächlichen Betätigungszeitpunkts eines Einlassventils von dem vorgegebenen Betätigungszeitpunkt aufgrund einer Abweichung einer Ventiltriebkonfiguration des Einlassventils von einer Referenz-Ventiltriebkonfiguration widergibt.

Bei 20 wird ein Referenz-Zylinderdruckverlauf als Referenzdruckverlauf bereitgestellt. Der Referenz-Zylinderdruckverlauf repräsentiert einen Druckverlauf, der in einer Referenz-Zylinderkammer einer Referenzverbrennungskraftmaschine bei einer vorgegeben Einstellung eines Referenzventiltriebs der Referenzverbrennungskraftmaschine zu erwarten ist. Der Referenz-Zylinderdruck kann mittels eines Modells bestimmt sein und/oder an einem Prüfstand ermittelt sein.

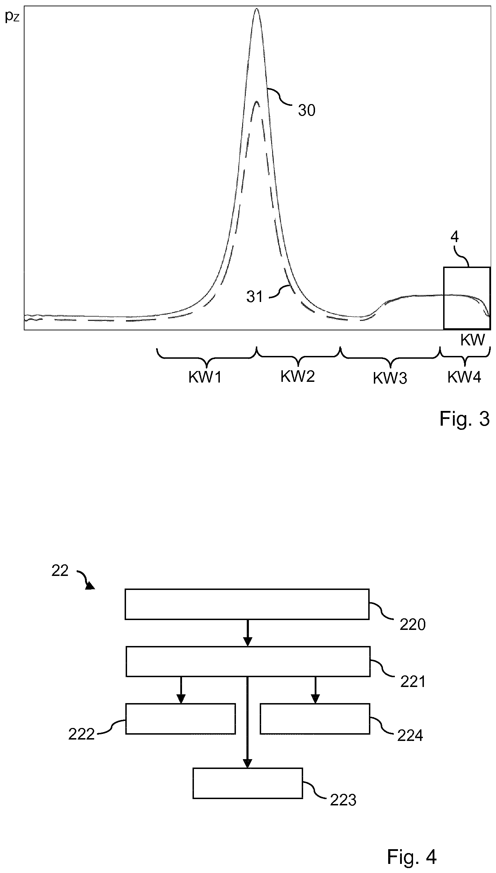

Ein Beispiel eines Referenz-Zylinderdruckverlaufs 30 während eines Verbrennungszyklus der Referenzverbrennungskraftmaschine ist in Fig. 3 gezeigt. Während des Verdichtens (Kurbelwellenbereich KW1) steigt der Zylinderdruck stark an. Anschließend während der Verbrennung (Kurbelwellenbereich KW2) fällt der Zylinderdruck wieder stark ab. Während des Ausstoßens (Kurbelwellenbereich KW3) steigt der Zylinderdruck leicht an und während des Ansaugens (Kurbelwellenbereich KW4) fällt der Zylinderdruck wieder leicht ab. Der Beginn des Abfallens des Zylinderdrucks während des Ansaugens repräsentiert ein Öffnen eines Referenz-Einlassventils der Referenzverbrennungskraftmaschine.

Bei 21 wird in der Zylinderkammer der Verbrennungskraftmaschine mit dem in der Zylinderkammer angeordneten Drucksensor ein Zylinderdruckverlauf gemessen. Bei der Messung ist der Ventiltrieb der Verbrennungskraftmaschine so eingestellt, dass lediglich geringe Toleranzen im Vergleich zu der vorgegeben Einstellung des Referenzventiltriebs der Referenzverbrennungskraftmaschine bestehen. Beispielsweise kann eine Phasenlage des Ventiltriebs im Vergleich zu der des Referenzventiltriebs fehlerhaft eingestellt sein, während der Ventiltrieb im Übrigen gemäß der vorgegeben Einstellung des Referenzventiltrieb der Referenzverbrennungskraftmaschine eingestellt ist. Während der Messung können die Abgasklappe und/oder der Abgasturbolader im Abgastrakt der Verbrennungskraftmaschine geschlossen sein.

Ein Beispiel eines gemessenen Zylinderdruckverlaufs 31 während eines Verbrennungszyklus der Verbrennungskraftmaschine ist in Fig. 3 gezeigt. Der Zylinderdruckverlauf 31 weist eine ähnliche Verlaufsform wie der Referenz-Zylinderdruckverlauf 30 auf. Allerdings ist der maximale Druck nach dem Verdichten geringer als bei dem Referenz-Zylinderdruckverlauf 30. Außerdem setzt das Ansaugen (Kurbelwellenbereich 4') bzw. ein Öffnen des Einlassventils der Verbrennungskraftmaschine in dem gemessenen Zylinderdruckverlauf 31 im Vergleich zu dem Referenz-Zylinderdruckverlauf 30 verzögert bzw. zu höheren Kurbelwellenwinkeln verschoben ein.

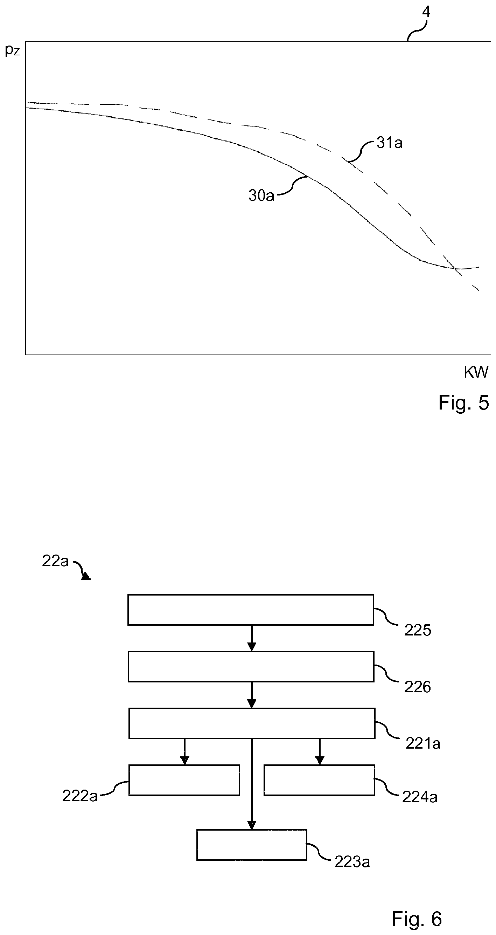

Bei 22 wird der gemessene Zylinderdruckverlauf 31, der in der Zylinderkammer der Verbrennungskraftmaschine herrscht, im Vergleich zu dem Referenz-Zylinderdruckverlauf 30, der Druckveränderungen in der Referenz-Zylinderkammer der Referenzverbrennungskraftmaschine bei einer vorgegeben Einstellung des Referenzventiltriebs darstellt, ausgewertet. Das Auswerten kann auf unterschiedliche Weise erfolgen. Nachfolgend werden anhand von Fig. 4 und Fig. 6 zwei Beispiele für das Auswerten des gemessenen Zylinderdruckverlaufs 31 beschrieben, die alternativ Anwendung finden.

Fig. 4 zeigt ein Flussdiagramm, das ein erstes Beispiel für das Auswerten 22 des gemessenen Zylinderdruckverlaufs 31 im Vergleich zu dem Referenz-Zylinderdruckverlauf 30 widergibt.

Bei 220 wird ein charakteristischer Abschnitt 31a des gemessenen Zylinderdruckverlaufs 31, der das Öffnen des Einlassventils der Verbrennungskraftmaschine repräsentiert, von dem Zylinderdruckverlauf separiert. Außerdem wird ein Referenzabschnitt 30a des Referenz-Zylinderdruckverlaufs 30, der das Öffnen des Referenz-Einlassventils der Referenzverbrennungskraftmaschine repräsentiert, von dem Referenz-Zylinderdruckverlauf 30 separiert.

Ein Beispiel für einen charakteristischer Abschnitt 31a und einen Referenzabschnitt 30a ist in Fig. 5 dargestellt. Es handelt sich dabei jeweils um einen Abschnitt des Zylinderdruckverlaufs 31 und des Referenz-Zylinderdruckverlaufs 30 innerhalb des Ausschnitts 4 in Fig. 3 bzw. in dem Kurbelwellenbereich KW4.

Bei 221 wird der charakteristische Abschnitt 31a mit dem Referenzabschnitt 30a verglichen und bestimmt, ob eine Verschiebung des charakteristischen Abschnitts 31a des gemessenen Zylinderdruckverlaufs 31 gegenüber dem Referenzabschnitt 30a des Referenz-Zylinderdruckverlaufs 30 besteht und, wenn eine Verschiebung existiert, ob es sich um eine Verschiebung zu kleineren Kurbelwellenwinkeln oder zu größeren Kurbelwellenwinkeln handelt.

Ist die bestimmte Verschiebung des charakteristischen Abschnitts 31a gegenüber dem Referenzabschnitt 30a eine Verschiebung zu kleineren Kurbelwellenwinkeln, so wird bei 222 festgelegt, dass das Einlassventil früher als gemäß der vorgegebenen Einstellung des Referenzventiltriebs der Referenzverbrennungskraftmaschine öffnet.

Ist die bestimmte Verschiebung des charakteristischen Abschnitts 31a gegenüber dem Referenzabschnitt 30a eine Verschiebung zu größeren Kurbelwellenwinkeln, wie in Fig. 5 dargestellt, so wird bei 223 festgelegt, dass das Einlassventil später als gemäß der vorgegebenen Einstellung des Referenzventiltriebs der Referenzverbrennungskraftmaschine öffnet.

Ist die bestimmte Verschiebung des charakteristischen Abschnitts 31a gegenüber dem Referenzabschnitt 30a gleich 0, so wird bei 224 festgelegt, dass das Einlassventil gemäß der vorgegebenen Einstellung des Referenzventiltriebs der Referenzverbrennungskraftmaschine öffnet.

Die Kenntnis über eine Verschiebung eines Öffnungszeitpunkts des Einlassventils relativ zu einem vorgegebenen Öffnungszeitpunkt wird dann der Erkennung der Abweichung des tatsächlichen Betätigungszeitpunkts von dem vorgegebenen Betätigungszeitpunkt bei 23 in Fig. 2, wie sie weiter unten beschrieben wird, zugrunde gelegt.

Fig. 6 zeigt ein Flussdiagramm, das ein zweites Beispiel für das Auswerten 22a des gemessenen Zylinderdruckverlaufs 31 im Vergleich zu dem Referenz-Zylinderdruckverlauf 30 widergibt.

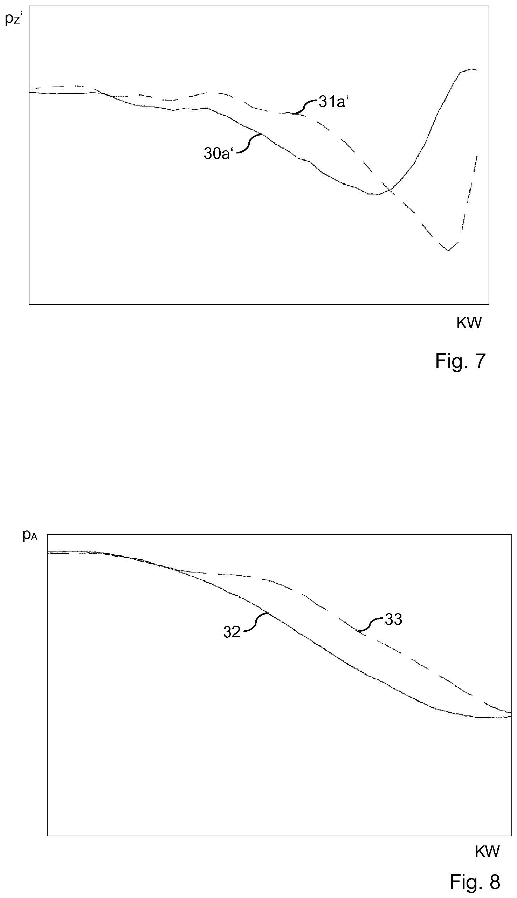

Bei 225 wird eine erste Ableitung des Referenz-Zylinderdruckverlaufs 30 gebildet und ein Referenzabschnitt 30a' der ersten Ableitung des Referenz-Zylinderdruckverlaufs 30, der das Öffnen des Referenz-Einlassventils der Referenzverbrennungskraftmaschine repräsentiert, separiert. Ein beispielhafter Referenzabschnitt 30a' ist in Fig. 7 gezeigt. Er zeigt zunächst einen Abfall und anschließend einen Anstieg, der eine Steigung aufweist, die betragsmäßig größer ist als die Steigung des Abfalls.

Bei 226 wird eine erste Ableitung des gemessenen Zylinderdruckverlaufs 31 gebildet und ein charakteristischer Abschnitt 31a' der ersten Ableitung des gemessenen Zylinderdruckverlaufs 31, der das Öffnen des Einlassventils der Verbrennungskraftmaschine repräsentiert, separiert. Ein beispielhafter charakteristischer Abschnitt 31a' ist ebenfalls in Fig. 7 gezeigt. Er zeigt zunächst einen Abfall und anschließend einen Anstieg, der eine Steigung aufweist, die betragsmäßig größer ist als die Steigung des Abfalls, wobei der Abfall sowie der Anstieg in dem charakteristischen Abschnitt 31a' jeweils später beginnen als in dem Referenzabschnitt 30a'.

Bei 221a wird der charakteristischer Abschnitt 31a' der ersten Ableitung des gemessenen Zylinderdruckverlaufs 31 mit einem Referenzabschnitt 30a' der ersten Ableitung des Referenz-Zylinderdruckverlaufs 30 verglichen und bestimmt, ob eine Verschiebung des charakteristischen Abschnitts 31a' der Ableitung des gemessenen Zylinderdruckverlaufs 31 gegenüber dem Referenzabschnitt 30a' der Ableitung des Referenz-Zylinderdruckverlaufs 30 besteht und, wenn eine Verschiebung existiert, ob es sich um eine Verschiebung zu früher (zu kleineren Kurbelwellenwinkeln) oder zu später (zu größeren Kurbelwellenwinkeln) handelt.

Ist die bestimmte Verschiebung des charakteristischen Abschnitts 31a' gegenüber dem Referenzabschnitt 30a' eine Verschiebung zu kleineren Kurbelwellenwinkeln, so wird bei 222a festgelegt, dass das Einlassventil früher als gemäß der vorgegebenen Einstellung des Referenzventiltriebs der Referenzverbrennungskraftmaschine öffnet.

Ist die bestimmte Verschiebung des charakteristischen Abschnitts 31a' gegenüber dem Referenzabschnitt 30a' eine Verschiebung zu größeren Kurbelwellenwinkeln, wie in Fig. 5 dargestellt, so wird bei 223a festgelegt, dass das Einlassventil später als gemäß der vorgegebenen Einstellung des Referenzventiltriebs der Referenzverbrennungskraftmaschine öffnet.

Ist die bestimmte Verschiebung des charakteristischen Abschnitts 31a' gegenüber dem Referenzabschnitt 30a' gleich 0, so wird bei 224a festgelegt, dass das Einlassventil gemäß der vorgegebenen Einstellung des Referenzventiltriebs der Referenzverbrennungskraftmaschine öffnet.

Die Kenntnis über eine Verschiebung eines Öffnungszeitpunkts des Einlassventils relativ zu einem vorgegebenen Öffnungszeitpunkt wird dann wiederum dem Erkennen der Abweichung des tatsächlichen Betätigungszeitpunkts von dem vorgegebenen Betätigungszeitpunkt bei 23 in Fig. 2 zugrunde gelegt.

Bei 23 in Fig. 2 wird die Abweichung des tatsächlichen Betätigungszeitpunkts von dem vorgegebenen Betätigungszeitpunkt anhand des Ergebnisses der Auswertung des gemessenen Druckverlaufs, hier anhand der Kenntnis über eine Richtung einer Verschiebung eines Öffnungszeitpunkts des Einlassventils relativ zu einem vorgegebenen Öffnungszeitpunkt des Einlassventils, bestimmt.

Wenn das Einlassventil gemäß der vorgegebenen Einstellung des Referenzventiltriebs der Referenzverbrennungskraftmaschine öffnet, wird erkannt, dass keine Abweichung des tatsächlichen Betätigungszeitpunkts von dem vorgegebenen Betätigungszeitpunkt vorliegt und entsprechend keine zu berücksichtigenden Toleranzen in der Ventiltriebkonfiguration existieren.

Wenn das Einlassventil jedoch nicht gemäß der vorgegebenen Einstellung des Referenzventiltriebs der Referenzverbrennungskraftmaschine öffnet, wird mittels der Motorsteuerung eine Ansteuerung des Einlassventils angepasst. Wenn das Einlassventil zu einem früheren Zeitpunkt als gemäß der vorgegebenen Einstellung des Referenzventiltriebs öffnet, wird die Ansteuerung des Einlassventils so verändert, dass das Einlassventil zu einem späteren Zeitpunkt öffnet, wobei eine Zeitspanne bzw. ein Kurbelwellenwinkelabstand zwischen dem früheren Zeitpunkt und dem späteren Zeitpunkt gespeichert wird. Wenn das Einlassventil zu einem späteren Zeitpunkt als gemäß der vorgegebenen Einstellung des Referenzventiltriebs öffnet, wird die Ansteuerung des Einlassventils so verändert, dass das Einlassventil zu einem früheren Zeitpunkt öffnet, wobei eine Zeitspanne bzw. ein Kurbelwellenwinkelabstand zwischen dem späteren Zeitpunkt und dem früheren Zeitpunkt gespeichert wird.

Anschließend wird ein Druckverlauf nach dem Anpassen der Ansteuerung des Einlassventils gemessen und mit dem Referenzdruckverlauf verglichen. Dieser Vergleich wird analog wie oben zu 22 beschrieben durchgeführt.

Das Anpassen der Ansteuerung des Einlassventils, das Messen eines Druckverlaufs nach der Anpassung und der Vergleich des nach der Anpassung gemessenen Druckverlaufs mit dem Referenzdruckverlauf werden so lange wiederholt, bis der gemessene Druckverlauf dem Referenzdruckverlauf entspricht. Aus den für jede Anpassung gespeicherten Zeitspannen bzw. Kurbelwellenwinkelabstände zwischen dem früheren Zeitpunkt und dem späteren Zeitpunkt wird dann die Abweichung des tatsächlichen Betätigungszeitpunkts von dem vorgegebenen Zeitpunkt in der vorgegebenen Einstellung des Referenzventiltriebs bestimmt. Diese Abweichung kann dann bei der Bestimmung der Zylinderfüllung berücksichtigt werden.

Die Schritte 20, 22 und 23 des Verfahrens 2 zum Erkennen der Abweichung des tatsächlichen Betätigungszeitpunkts von dem vorgegebenen Betätigungszeitpunkt werden mittels der Motorsteuerung der Verbrennungskraftmaschine ausgeführt. Das Verfahren kann an einem Bandende einer Herstellungslinie der Verbrennungskraftmaschine, bei einer Wartung der Verbrennungskraftmaschine oder in vorgegebenen Abständen, beispielsweise nach einer vorgegebenen Anzahl an gefahrenen Kilometern, ausgeführt werden.

In einer ersten Alternative kann zum Durchführen des Verfahrens 2 in Fig. 2 anstelle des Referenz-Zylinderdruckverlaufs ein Referenz-Abgasgegendruckverlauf, der in einem Referenzabgastrakt der Referenzverbrennungskraftmaschine zu erwarten ist, und anstelle des gemessenen Zylinderdruckverlaufs ein gemessener Abgasgegendruckverlauf, der in dem Abgastrakt der Verbrennungskraftmaschine gemessen ist, verwendet werden. Die Auswertung des gemessenen Abgasgegendrucks erfolgt in analoger Weise wie die oben beschriebene Auswertung bei 22.

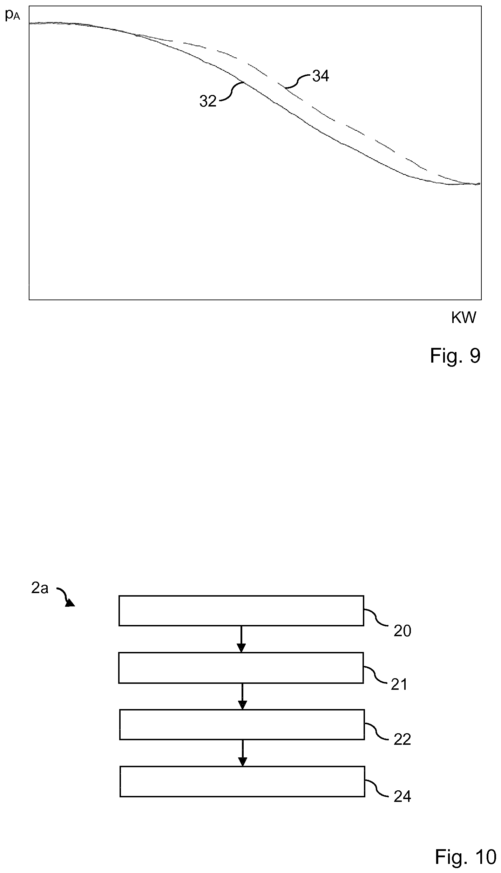

Beispielsweise kann aus dem Referenz-Abgasgegendruckverlauf ein Referenzabschnitt 32 des Referenz-Abgasgegendruckverlaufs separiert werden und aus dem gemessenen Abgasgegendruckverlauf ein charakteristischer Abschnitt 33 des gemessenen Abgasgegendrucks separiert werden. Der Referenzabschnitt 32 und der charakteristische Abschnitt 33 sind in Fig. 8 gezeigt. Fig. 9 zeigt neben dem Referenzabschnitt 32 einen charakteristischen Abschnitt 34, der gegenüber dem Referenzabschnitt 32 weniger verschoben ist als der charakteristische Abschnitt 33 in Fig. 8. Der Referenzabschnitt 32 und der charakteristische Abschnitt 33 werden verglichen, um eine Kenntnis über eine Verschiebung eines Öffnungszeitpunkts des Einlassventils relativ zu einem vorgegebenen Öffnungszeitpunkt zu erlangen.

Auch das Erkennen der Abweichung des tatsächlichen Betätigungszeitpunkts von dem vorgegebenen Betätigungszeitpunkt erfolgt in analoger Weise wie hinsichtlich 23 oben beschrieben.

In einer zweiten Alternative kann zum Durchführen des Verfahrens 2 in Fig. 2 anstelle des Referenz-Zylinderdruckverlaufs ein Referenz-Saugrohrdruckverlauf, der in einem Referenzsaugrohr der Referenzverbrennungskraftmaschine zu erwarten ist, und anstelle des gemessenen Zylinderdruckverlaufs ein gemessener Saugrohrdruckverlauf, der in dem Saugrohr der Verbrennungskraftmaschine gemessen ist, verwendet werden. Die Auswertung des gemessenen Saugrohrdrucks erfolgt in analoger Weise wie die oben beschriebene Auswertung bei 22. Auch das Erkennen der Abweichung des tatsächlichen Betätigungszeitpunkts von dem vorgegebenen Betätigungszeitpunkt erfolgt in analoger Weise wie unter 23 oben beschrieben.

Fig. 10 zeigt ein Flussdiagramm, das ein zweites Ausführungsbeispiel eines Verfahrens 2a zum Erkennen der Abweichung des tatsächlichen Betätigungszeitpunkts von dem vorgegebenen Betätigungszeitpunkt widergibt.

Die Schritte 20 bis 22 werden wie oben hinsichtlich des ersten Ausführungsbeispiels beschrieben durchgeführt.

Bei 24 wird die Abweichung des tatsächlichen Betätigungszeitpunkts von dem vorgegebenen Betätigungszeitpunkt anhand des Ergebnisses der Auswertung des gemessenen Druckverlaufs, hier anhand der Kenntnis über eine Richtung einer Verschiebung eines Öffnungszeitpunkts des Einlassventils relativ zu einem vorgegebenen Öffnungszeitpunkt des Einlassventils, bestimmt.

Wenn das Einlassventil gemäß der vorgegebenen Einstellung des Referenzventiltriebs der Referenzverbrennungskraftmaschine öffnet, wird erkannt, dass keine Abweichung des tatsächlichen Betätigungszeitpunkts von dem vorgegebenen Betätigungszeitpunkt vorliegt und entsprechend keine zu berücksichtigenden Toleranzen in der Ventiltriebkonfiguration existieren.

Wenn das Einlassventil jedoch nicht gemäß der vorgegebenen Einstellung des Referenzventiltriebs der Referenzverbrennungskraftmaschine öffnet, wird mit Hilfe einer Justiervorrichtung eine mechanischen Konfiguration des Ventiltriebs der Verbrennungskraftmaschine in Abhängigkeit des Ergebnisses der Auswertung des gemessenen Zylinderdruckverlaufs justiert. Beispielsweise wird eine Verstelleinrichtung der Nockenwelle entsprechend justiert.

Wenn das Einlassventil zu einem früheren Zeitpunkt als gemäß der vorgegebenen Einstellung des Referenzventiltriebs öffnet, wird die Nockenwelle so justiert, dass das Einlassventil zu einem späteren Zeitpunkt öffnet, wobei eine Zeitspanne bzw. ein Kurbelwellenwinkelabstand zwischen dem früheren Zeitpunkt und dem späteren Zeitpunkt gespeichert wird. Wenn das Einlassventil zu einem späteren Zeitpunkt als gemäß der vorgegebenen Einstellung des Referenzventiltriebs öffnet, wird die Nockenwelle so justiert, dass das Einlassventil zu einem früheren Zeitpunkt öffnet, wobei eine Zeitspanne bzw. ein Kurbelwellenwinkelabstand zwischen dem späteren Zeitpunkt und dem früheren Zeitpunkt gespeichert wird.

Anschließend wird ein Druckverlauf nach dem Justieren gemessen und mit dem Referenzdruckverlauf verglichen. Dieser Vergleich wird analog wie oben zu 22 beschrieben durchgeführt.

Das Justieren, das Messen eines Druckverlaufs nach dem Justieren und der Vergleich des nach dem Justieren gemessenen Druckverlaufs mit dem Referenzdruckverlauf werden so lange wiederholt, bis der gemessene Druckverlauf dem Referenzdruckverlauf entspricht. Aus den für jede Justierung gespeicherten Zeitspannen bzw. Kurbelwellenwinkelabstände zwischen dem früheren Zeitpunkt und dem späteren Zeitpunkt wird dann die Abweichung des tatsächlichen Betätigungszeitpunkts von dem vorgegebenen Zeitpunkt in der vorgegebenen Einstellung des Referenzventiltriebs bestimmt.

Das Verfahren 2a zum Erkennen einer Abweichung eines tatsächlichen Betätigungszeitpunkts von dem vorgegebenen Betätigungszeitpunkt wird durch eine Auswerteeinheit einer separaten Datenverarbeitungseinrichtung, die mit einem separaten Drucksensor oder einem in der Verbrennungskraftmaschine verbauten Seriendrucksensor verbunden ist, ausgeführt, beispielsweise an einem Bandende einer Herstellungslinie der Verbrennungskraftmaschine oder bei der Wartung der Verbrennungskraftmaschine.

Wie bereits hinsichtlich des Verfahrens 2 erwähnt, kann anstelle des Zylinderdruckverlaufs ein gemessener Abgasgegendruck oder ein gemessener Saugrohrdruck zugrunde gelegt werden.

Alle beschriebenen Verfahren können in analoger Weise für andere toleranzbehaftete Abweichungen von der vorgegebenen Einstellung des Ventiltriebs eingesetzt werden, beispielsweise das Öffnen oder Schließen des Auslassventils oder das Schließen des Einlassventils.

### Bezugszeichenliste

- 1: Verbrennungskraftmaschine mit Ventiltrieb
- 10: Zylinder
- 100: Zylinderkammer
- 101: Zylinderkolben
- 11: Saugrohr
- 110: Einlassventil
- 12: Abgastrakt
- 120: Auslassventil
- 13: Drucksensor
- 14: Kurbelwelle
- 15: Riemen als Kopplung zwischen Kurbelwelle und Nockenwelle
- 16: Nockenwelle
- 2, 2a: Verfahren zum Erkennen einer Abweichung des tatsächlichen Betätigungszeitpunkts von dem vorgegebenen Betätigungszeitpunkts
- 20: Bereitstellen eines Referenz-Zylinderdruckverlaufs
- 21: Messen eines Zylinderdruckverlaufs
- 22, 22a: Auswerten des gemessenen Zylinderdruckverlaufs
- 220: Separieren eines charakteristischen Abschnitts und eines Referenz-Abschnitts
- 221: Vergleichen des charakteristischen Abschnitts mit dem Referenz-Abschnitt und Bestimmen einer Verschiebung des charakteristischen Abschnitts
- 221a: Bestimmen einer Verschiebung eines charakteristischen Abschnitts der Ableitung des gemessenen Druckverlaufs
- 222, 222a: Festlegen, dass das Einlassventil früher als gemäß der vorgegebenen Einstellung öffnet
- 223, 223a: Festlegen, dass das Einlassventil später als gemäß der vorgegebenen Einstellung öffnet
- 224, 224a: Festlegen, dass das Einlassventil gemäß der vorgegebenen Einstellung öffnet
- 225: Bilden einer ersten Ableitung des Referenz-Zylinderdruckverlaufs und Separieren eines charakteristischen Abschnitts
- 226: Bilden einer ersten Ableitung des gemessenen Zylinderdruckverlaufs und Separieren eines Referenz-Abschnitts
- 23: Bestimmen einer Abweichung des tatsächlichen Betätigungszeitpunkts von dem vorgegebenen Betätigungszeitpunkts
- 24: Justieren einer mechanischen Konfiguration des Ventiltriebs
- 30: Referenz-Zylinderdruckverlauf
- 30a: Referenzabschnitt des Referenz-Zylinderdruckverlaufs
- 30a': Ableitung des Referenzabschnitts des Referenz-Zylinderdruckverlaufs
- 31: gemessener Zylinderdruckverlauf
- 31a: charakteristischer Abschnitt des gemessenen Zylinderdruckverlaufs
- 31a': Ableitung des charakteristischen Abschnitts des gemessenen Zylinderdruckverlaufs
- 32: Referenzabschnitt des Referenz-Abgasdruckverlaufs
- 33, 34: charakteristischer Abschnitt des gemessenen Abgasgegendrucks
- 4: Ausschnitt mit charakteristischem Abschnitt und Referenzabschnitt

- KW: Kurbelwellenwinkel
- KW1-KW4: Kurbelwellenwinkelbereiche
- p_{z}: Zylinderdruck
- p_{z}': Ableitung des Zylinderdrucks
- p_{A}: Abgasgegendruck

## Patentansprüche

1. Verfahren (2, 2a) zum Erkennen einer Abweichung eines tatsächlichen Betätigungszeitpunkts eines Gaswechselventils (110, 120) einer Verbrennungskraftmaschine (1) von einem vorgegebenen Betätigungszeitpunkt aufgrund einer Abweichung einer Ventiltriebkonfiguration des Gaswechselventils von einer Referenz-Ventiltriebkonfiguration eines Referenzgaswechselventils einer Referenzverbrennungskraftmaschine, umfassend:
Auswerten (22, 22a) eines gemessenen Druckverlaufs (31), der in einem gasführenden Bereich (100, 11, 12) der Verbrennungskraftmaschine (1) gemessen ist, im Vergleich zu einem Referenzdruckverlauf (30), der in einem gasführenden Referenzbereich der Referenzverbrennungskraftmaschine zu erwarten ist, wobei der gasführende Bereich der Verbrennungskraftmaschine (1) dem gasführenden Referenzbereich der Referenzverbrennungskraftmaschine entspricht, wobei ein Stellorgan während der Messung des Druckverlaufs so eingestellt ist, dass sich ein Druck vor dem Stellorgan erhöht, wobei das Stellorgan ein Abgasturbolader oder eine Abgasklappe ist; und
Erkennen der Abweichung des tatsächlichen Betätigungszeitpunkts von dem vorgegebenen Betätigungszeitpunkt in Abhängigkeit eines Ergebnisses der Auswertung des gemessenen Druckverlaufs (31).

2. Verfahren (2, 2a) nach dem vorhergehenden Anspruch, wobei
der gemessene Druckverlauf ein Abgasgegendruckverlauf ist, der in einem Abgastrakt (12) der Verbrennungskraftmaschine (1) gemessen ist, und der Referenzdruckverlauf ein Referenz-Abgasgegendruckverlauf ist, der in einem Referenz-Abgastrakt der Referenzverbrennungskraftmaschine zu erwarten ist, oder
der gemessene Druckverlauf ein Zylinderdruckverlauf (31) ist, der in einer Zylinderkammer (100) der Verbrennungskraftmaschine (1) gemessen ist, und der Referenzdruckverlauf ein Referenz-Zylinderdruckverlauf (30) ist, der in einer Referenz-Zylinderkammer der Referenzverbrennungskraftmaschine zu erwarten ist, oder
der gemessene Druckverlauf ein Saugrohrdruckverlauf ist, der in einem Saugrohr (11) der Verbrennungskraftmaschine (1) gemessen ist, und der Referenzdruckverlauf ein Referenz-Saugrohrdruckverlauf ist, der in einem Referenz-Saugrohr der Referenzverbrennungskraftmaschine zu erwarten ist.

3. Verfahren (2, 2a) nach einem der vorhergehenden Ansprüche, wobei
beim Auswerten (22) des gemessenen Druckverlaufs (31) eine Verschiebung eines charakteristischen Abschnitts (31a, 33, 34) des gemessenen Druckverlaufs (31), der ein Betätigen des Gaswechselventils (110, 120) der Verbrennungskraftmaschine (1) repräsentiert, gegenüber einem Referenzabschnitt (30a, 32) des Referenzdruckverlaufs (30), der dem charakteristischen Abschnitt ( 31a, 33, 34) des gemessenen Druckverlaufs (31) entspricht, bestimmt wird (220), und
die Abweichung des tatsächlichen Betätigungszeitpunkts von dem vorgegebenen Betätigungszeitpunkt in Abhängigkeit der bestimmten Verschiebung des charakteristischen Abschnitts (31a, 33, 34) des gemessenen Druckverlaufs (31) erkannt wird.

4. Verfahren (2, 2a) nach dem vorhergehenden Anspruch, wobei
der charakteristische Abschnitt ( 31a, 33, 34) des gemessenen Druckverlaufs (31) gegenüber dem entsprechenden Referenzabschnitt des Referenzdruckverlaufs verfrüht ist und beim Erkennen der Abweichung des tatsächlichen Betätigungszeitpunkts von dem vorgegebenen Betätigungszeitpunkt berücksichtigt wird, dass der Betätigungszeitpunkt des Gaswechselventils (110, 120) vor dem vorgegebenen Betätigungszeitpunkt liegt; oder
der charakteristische Abschnitt ( 31a, 33, 34) des gemessenen Druckverlaufs (31) gegenüber dem entsprechenden Referenzabschnitt des Referenzdruckverlaufs verspätet ist und beim Erkennen der Abweichung des tatsächlichen Betätigungszeitpunkts von dem vorgegebenen Betätigungszeitpunkt berücksichtigt wird, dass der Betätigungszeitpunkt des Gaswechselventils (110, 120) nach dem vorgegebenen Betätigungszeitpunkt liegt; oder
der charakteristische Abschnitt ( 31a, 33, 34) des gemessenen Druckverlaufs (31) mit dem entsprechenden Referenzabschnitt des Referenzdruckverlaufs übereinstimmt und beim Erkennen der Abweichung des tatsächlichen Betätigungszeitpunkts von dem vorgegebenen Betätigungszeitpunkt berücksichtigt wird, dass der Betätigungszeitpunkt des Gaswechselventils (110, 120) dem vorgegebenen Betätigungszeitpunkt entspricht.

5. Verfahren (2, 2a) nach einem der Ansprüche 1 oder 2, wobei
beim Auswerten (22a) des gemessenen Druckverlaufs (31)
eine erste Ableitung des gemessenen Druckverlaufs (31) und eine erste Ableitung des Referenzdruckverlaufs (30) gebildet werden (224, 225) und
eine Verschiebung eines charakteristischen Abschnitts (31a') der ersten Ableitung des gemessenen Druckverlaufs (31), der ein Betätigen des Gaswechselventils (110, 120) der Verbrennungskraftmaschine (1) repräsentiert, gegenüber einem Referenzabschnitt (30a') der ersten Ableitung des Referenzdruckverlaufs (30), der dem charakteristischen Abschnitt (31a') der Ableitung des gemessenen Druckverlaufs (31) entspricht, bestimmt wird (220a); und
die Abweichung des tatsächlichen Betätigungszeitpunkts von dem vorgegebenen Betätigungszeitpunkt in Abhängigkeit der bestimmten Verschiebung des charakteristischen Abschnitts (31a') der ersten Ableitung des gemessenen Druckverlaufs (31) erkannt wird.

6. Verfahren (2, 2a) nach einem der vorhergehenden Ansprüche, wobei das Erkennen der Abweichung des tatsächlichen Betätigungszeitpunkts von dem vorgegebenen Betätigungszeitpunkt umfasst:
Anpassend der Ansteuerung des Gaswechselventils in Abhängigkeit des Ergebnisses der Auswertung des gemessenen Druckverlaufs (31);
Vergleichen eines nach dem Anpassen der Ansteuerung des Gaswechselventils gemessenen Druckverlaufs der Verbrennungskraftmaschine mit dem Referenzdruckverlauf; und
Bestimmen der Abweichung des tatsächlichen Betätigungszeitpunkts von dem vorgegebenen Betätigungszeitpunkt auf Grundlage eines Ergebnisses des Vergleichens des nach dem Anpassen der Ansteuerung des Gaswechselventils gemessenen Druckverlaufs mit dem Referenzdruckverlauf.

7. Verfahren (2, 2a) nach einem der vorhergehenden Ansprüche, wobei das Verfahren (2, 2a) während einer Funktionsprüfung bei Abschluss einer Herstellung der Verbrennungskraftmaschine (1) oder nach Aufnahme der Benutzung der Verbrennungskraftmaschine (1) durchgeführt wird.

8. Steuervorrichtung für eine Verbrennungskraftmaschine (1), die zum Ausführen eines Verfahrens zum Erkennen einer Abweichung eines tatsächlichen Betätigungszeitpunkts eines Gaswechselventils (110, 120) einer Verbrennungskraftmaschine (1) von einem vorgegebenen Betätigungszeitpunkt aufgrund einer Abweichung einer Ventiltriebkonfiguration des Gaswechselventils (110, 120) von einer Referenz-Ventiltriebkonfiguration eines Referenzgaswechselventils einer Referenzverbrennungskraftmaschine nach einem der Ansprüche 1 bis 7 ausgebildet ist.

## Claims

1. Method (2, 2a) for detecting a deviation of an actual
activation time of a gas exchange valve (110, 120) of an internal combustion engine (1) from a predefined activation time due to a deviation of a valve train configuration of the gas exchange valve from a reference valve-train configuration of a reference gas exchange valve of a reference internal combustion engine, comprising:
evaluation (22, 22a) of a measured pressure curve (31), which is measured in a gas-conducting region (100, 11, 12) of the internal combustion engine (1), in
comparison with a reference pressure curve (30) which is to be expected in a gas-conducting reference region of the reference internal combustion engine, the gas-conducting region of the internal combustion engine (1) corresponding to the gas-conducting reference region of the reference internal combustion engine, wherein a control element is set during measurement of the pressure curve such that a pressure upstream of the control element is increased, wherein the control element is an exhaust gas turbocharger or an exhaust gas valve; and
detection of the deviation of the actual activation time from the predefined activation time subject to a result of the evaluation of the measured pressure curve (31).

2. Method (2, 2a) according to the preceding claim, wherein
the measured pressure curve is an exhaust-gas back-pressure curve measured in an exhaust gas tract (12) of the internal combustion engine (1), and the reference pressure curve is a reference exhaust-gas back-pressure curve which is to be expected in a reference exhaust gas tract of the reference internal combustion engine, or
the measured pressure curve is a cylinder pressure curve (31) measured in a cylinder chamber (100) of the internal combustion engine (1), and the reference pressure curve is a reference cylinder pressure curve (30) which is to be expected in a reference cylinder chamber of the reference internal combustion engine, or
the measured pressure curve is an intake pipe pressure curve measured in an intake pipe (11) of the internal combustion engine (1), and the reference pressure curve is a reference intake pipe pressure curve which is to be expected in a reference intake pipe of the reference internal combustion engine.

3. Method (2, 2a) according to either of the preceding claims, wherein
in the evaluation (22) of the measured pressure curve (31) a shift of a characteristic portion (31a, 33, 34) of the measured pressure curve (31) is determined (220), which characteristic portion represents an activation of the gas exchange valve (110, 120) of the internal combustion engine (1) relative to a reference portion (30a, 32) of the reference pressure curve (30), which reference portion corresponds to the characteristic portion (31a, 33, 34) of the measured pressure curve (31), and
the deviation of the actual activation time from the predefined activation time is detected in accordance with the determined shift of the characteristic portion (31a, 33, 34) of the measured pressure curve (31).

4. Method (2, 2a) according to the preceding claim, wherein
the characteristic portion (31a, 33, 34) of the measured pressure curve (31) is early relative to the corresponding reference portion of the reference pressure curve and, in the detection of the deviation of the actual activation time from the predefined activation time, it is taken into consideration that the activation time of the gas exchange valve (110, 120) lies before the predefined activation time; or
the characteristic portion (31a, 33, 34) of the measured pressure curve (31) is late relative to the corresponding reference portion of the reference pressure curve and, in the detection of the deviation of the actual activation time from the predefined activation time, it is taken into consideration that the activation time of the gas exchange valve (110, 120) lies after the predefined activation time; or
the characteristic portion (31a, 33, 34) of the measured pressure curve (31) matches the corresponding reference portion of the reference pressure curve and, in the detection of the deviation of the actual activation time from the predefined activation time, it is taken into consideration that the activation time of the gas exchange valve (110, 120) corresponds to the predefined activation time.

5. Method (2, 2a) according to either of Claims 1 and 2, wherein
in the evaluation (22a) of the measured pressure curve (31) a first derivative of the measured pressure curve (31) and a first derivative of the reference pressure curve (30) are formed (224, 225), and
a shift of a characteristic portion (31a') of the first derivative of the measured pressure curve (31), which characteristic portion represents an activation of the gas exchange valve (110, 120) of the internal combustion engine (1), relative to a reference portion (30a') of the first derivative of the reference pressure curve (30), which reference portion corresponds to the characteristic portion (31a') of the derivative of the measured pressure curve (31), is determined (220a); and
the deviation of the actual activation time from the predefined activation time is detected in accordance with the determined shift of the characteristic portion (31a') of the first derivative of the measured pressure curve (31).

6. Method (2, 2a) according to any one of the preceding claims, wherein the detection of the deviation of the actual activation time from the predefined activation time comprises:
adjustment of the actuation of the gas exchange valve in accordance with the result of the evaluation of the measured pressure curve (31);
comparison of a pressure curve of the internal combustion engine measured after the adjustment of the actuation of the gas exchange valve with the reference pressure curve; and
determination of the deviation of the actual activation time from the predefined activation time on the basis of a result of the comparison of the pressure curve measured after the adjustment of the actuation of the gas exchange valve with the reference pressure curve.

7. Method (2, 2a) according to any one of the preceding claims, wherein the method (2, 2a) is carried out during a functional test when production of the internal combustion engine (1) is completed or after use of the internal combustion engine (1) has commenced.

8. Control device for an internal combustion engine (1), the control device being designed to carry out a method for detecting a deviation of an actual activation time of a gas exchange valve (110, 120) of an internal combustion engine (1) from a predefined activation time due to a deviation of a valve-train configuration of the gas exchange valve (110, 120) from a reference valve-train configuration of a reference gas exchange valve of a reference internal combustion engine according to any one of Claims 1 to 7.

## Revendications

1. Procédé (2, 2a) pour la détection d'un écart entre un moment d'actionnement réel d'une soupape d'échange de gaz (110, 120) d'un moteur à combustion interne (1) et un moment d'actionnement prédéfini en raison d'un écart entre une configuration de commande de soupape de la soupape d'échange de gaz et une configuration de commande de soupape de référence d'une soupape d'échange de gaz de référence d'un moteur à combustion interne de référence, comprenant :
l'évaluation (22, 22a) d'une courbe de pression (31) mesurée, qui est mesurée dans une zone de guidage de gaz (100, 11, 12) du moteur à combustion interne (1), en comparaison avec une courbe de pression de référence (30), qui est attendue dans une zone de guidage de gaz de référence du moteur à combustion interne de référence, la zone de guidage de gaz du moteur à combustion interne (1) correspondant à la zone de guidage de gaz de référence du moteur à combustion interne de référence, un organe de réglage étant réglé de telle façon durant la mesure de la courbe de pression qu'une pression augmente devant l'organe de réglage, l'organe de réglage étant un turbocompresseur à gaz d'échappement ou un clapet de gaz d'échappement ; et
la détection de l'écart entre le moment d'actionnement réel et le moment d'actionnement prédéfini en fonction d'un résultat de l'évaluation de la courbe de pression (31) mesurée.

2. Procédé (2, 2a) selon la revendication précédente, dans lequel
la courbe de pression mesurée est une courbe de contre-pression de gaz d'échappement, qui est mesurée dans une conduite de gaz d'échappement (12) du moteur à combustion interne (1) et la courbe de pression de référence est une courbe de contre-pression de gaz d'échappement de référence, qui est attendue dans une conduite de gaz d'échappement de référence du moteur à combustion interne de référence ou
la courbe de pression mesurée est une courbe de pression de cylindre (31), qui est mesurée dans une chambre de cylindre (100) du moteur à combustion interne (1) et la courbe de pression de référence est une courbe de pression de cylindre de référence (30), qui est attendue dans une chambre de cylindre de référence du moteur à combustion interne de référence ou
la courbe de pression mesurée est une courbe de pression de tube d'aspiration, qui est mesurée dans un tube d'aspiration (11) du moteur à combustion interne (1) et la courbe de pression de référence est une courbe de pression de tube d'aspiration de référence, qui est attendue dans un tube d'aspiration de référence du moteur à combustion interne de référence.

3. Procédé (2, 2a) selon l'une quelconque des revendications précédentes, dans lequel
lors de l'évaluation (22) de la courbe de pression (31) mesurée, un déplacement d'une section caractéristique (31a, 33, 34) de la courbe de pression (31) mesurée, qui représente un actionnement de la soupape d'échange de gaz (110, 120) du moteur à combustion interne (1), par rapport à une section de référence (30a, 32) de la courbe de pression de référence (30), qui correspond à la section caractéristique (31a, 33, 34) de la courbe de pression (31) mesurée, est déterminé (220) et
l'écart entre le moment d'actionnement réel et le moment d'actionnement prédéfini est détecté en fonction du déplacement déterminé de la section caractéristique (31a, 33, 34) de la courbe de pression (31) mesurée.

4. Procédé (2, 2a) selon la revendication précédente, dans lequel
la section caractéristique (31a, 33, 34) de la courbe de pression (31) mesurée est prématurée par rapport à la section de référence correspondante de la courbe de pression de référence et, lors de la détection de l'écart entre le moment d'actionnement réel et le moment d'actionnement prédéfini, le fait que le moment d'actionnement de la soupape d'échange de gaz (110, 120) se situe avant le moment d'actionnement prédéfini est pris en compte ; ou
la section caractéristique (31a, 33, 34) de la courbe de pression (31) mesurée est retardée par rapport à la section de référence correspondante de la courbe de pression de référence et, lors de la détection de l'écart entre le moment d'actionnement réel et le moment d'actionnement prédéfini, le fait que le moment d'actionnement de la soupape d'échange de gaz (110, 120) se situe après le moment d'actionnement prédéfini est pris en compte ; ou
la section caractéristique (31a, 33, 34) de la courbe de pression (31) mesurée coïncide avec la section de référence correspondante de la courbe de pression de référence et, lors de la détection de l'écart entre le moment d'actionnement réel et le moment d'actionnement prédéfini, le fait que le moment d'actionnement de la soupape d'échange de gaz (110, 120) correspond au moment d'actionnement prédéfini est pris en compte.

5. Procédé (2, 2a) selon l'une quelconque des revendications 1 ou 2, dans lequel
lors de l'évaluation (22a) de la courbe de pression (31) mesurée,
une première dérivée de la courbe de pression (31) mesurée et une première dérivée de la courbe de pression de référence (30) sont formées (224, 225) et
un déplacement d'une section caractéristique (31a') de la première dérivée de la courbe de pression (31) mesurée, qui représente un actionnement de la soupape d'échange de gaz (110, 120) du moteur à combustion interne (1), par rapport à une section de référence (30a') de la première dérivée de la courbe de pression de référence (30), qui correspond à la section caractéristique (31a') de la dérivée de la courbe de pression (31) mesurée, est déterminé (220a) ; et
l'écart entre le moment d'actionnement réel et le moment d'actionnement prédéfini est détecté en fonction du déplacement déterminé de la section caractéristique (31a') de la première dérivée de la courbe de pression (31) mesurée.

6. Procédé (2, 2a) selon l'une quelconque des revendications précédentes, dans lequel la détection de l'écart entre le moment d'actionnement réel et le moment d'actionnement prédéfini comprend :
l'adaptation de la commande de la soupape d'échange de gaz en fonction du résultat de l'évaluation de la courbe de pression (31) mesurée ;
la comparaison d'une courbe de pression du moteur à combustion interne mesurée après l'adaptation de la commande de la soupape d'échange de gaz à la courbe de pression de référence ; et
la détermination de l'écart entre le moment d'actionnement réel et le moment d'actionnement prédéfini sur la base d'un résultat de la comparaison de la courbe de pression mesurée après l'adaptation de la commande de la soupape d'échange de gaz à la courbe de pression de référence.

7. Procédé (2, 2a) selon l'une quelconque des revendications précédentes, dans lequel le procédé (2, 2a) est exécuté durant un contrôle de fonctionnement à la fin d'une fabrication du moteur à combustion interne (1) ou après le début de l'utilisation du moteur à combustion interne (1).

8. Dispositif de commande pour un moteur à combustion interne (1), qui est conçu pour l'exécution d'un procédé pour la détection d'un écart entre un moment d'actionnement réel d'une soupape d'échange de gaz (110, 120) d'un moteur à combustion interne (1) et un moment d'actionnement prédéfini en raison d'un écart entre une configuration de commande de soupape de la soupape d'échange de gaz (110, 120) et une configuration de commande de soupape de référence d'une soupape d'échange de gaz de référence d'un moteur à combustion interne de référence selon l'une quelconque des revendications 1 à 7.
